# EUROPÄISCHE PATENTANMELDUNG

(11) **EP 1 357 373 A2**
(43) Veröffentlichungstag der Anmeldung: **29.10.2003**
(21) Anmeldenummer: 03090110.2
(22) Anmeldetag: 16.04.2003
(51) Int. Cl.: G01M 3/04

(54) **Verfahren für die sicherheitstechnische Überprüfung, Diagnose und Überwachung von Betriebsszuständen von Anlagen und Vorrichtung zur Durchführung des Verfahrens**

(30) Priorität: 20.04.2002 DE 10217729
(71) Anmelder: TÜV Anlagentechnik GmbH, Unternehmensgruppe TÜV Rheinland Berlin Brandenburg, 51105 Köln (DE)
(72) Erfinder: Ryser, Hans, 12347 Berlin (DE); Fiedler, Martin, 04103 Leipzig (DE)
(74) Vertreter: Hengelhaupt, Jürgen D., Dipl.-Ing.

(57) **Zusammenfassung**

Die Erfindung betrifft ein Verfahren und eine Vorrichtung zur sicherheitstechnischen Überprüfung, Diagnose, Überwachung und zur Einflußnahme auf Betriebszustände von Objekten, wie Anlagen, Aufzüge, Maschinen, mittels Sensorik und Fernwirktechnik.

Die Aufgabe der Erfindung, ein Verfahren und eine Vorrichtung zu beschreiben, mit denen die Nachteile des Standes der Technik vermieden werden und mit denen gewährleistet ist, dass Sachverständige unter Zuhilfenahme von intelligenter Mess- und Prüftechnik und den bekannten Mitteln der Fernwirktechnik vorbereitend und/oder unterstützend online per Fernwirktechnik oder vor Ort Prüfaufgaben und Einflussnahmen an den zu überwachenden Objekten derart realisieren können, dass bei Havariefällen auftretende Gefährdungen minimiert und signalisiert werden, wird dadurch gelöst, dass über eine multifunktionale, intelligente Sensorik und eine dazugehörige Sensor-Schnittstelle (1) das Objekt (4) kontinuierlich auf das Vorhandensein von Fehlern oder den Eintritt eines unzulässigen Ereignisses wie Vorhandensein eines unzulässigen Mediums (14) wie Öl detektiert wird und beim Vorhandensein eines Fehlers bzw. eines unzulässigen Ereignisses das Detektionsergebnis über eine Modem-Schnittstelle (2) und eine online-Verbindung (5) zu mindestens einer Rechnerzentrale (3) bzw. einem internetfähigen Personalcomputer zur Auslösung eines Alarms und/oder Maßnahmen zur Fehlerbeseitigung und/oder Schadensminimierung geführt wird, wobei von der Zentrale (3) oder direkt vor Ort über externe Schnittstellen (8) der Modem-Schnittstelle (2) jederzeit beliebige sicherheitstechnische Überprüfungen und Bewertungen der Funktion der Sensorik sowie aller angeschlossenen Einrichtungen mittels Prüfroutinen durchgeführt werden.

## Beschreibung

Die Erfindung beschreibt ein Verfahren zur sicherheitstechnischen Überprüfung, Diagnose und Überwachung von Betriebszuständen von Anlagen oder Maschinen und eine Vorrichtung zur Durchführung des Verfahrens gemäß den Merkmalen der Ansprüche 1 und 8.

Anwendungsgebiete der Erfindung sind insbesondere die Diagnose von Aufzügen, Tankanlagen, von Hydraulikaggregaten, Verdichtern, Maschinen und Schutzummantelungen.

Mit dem Diagnosesystem nach der Erfindung können Aufzüge, zum Beispiel hydraulische Anlagen, online oder durch eine Vor-Ort-Prüfung sicherheitstechnisch überprüft, bewertet und die Funktion der Sensorik sowie alle angeschlossenen Sicherheits- und Überwachungseinrichtungen mittels vorgegebenen Prüfaufgaben von einem sachverständigen Prüfingenieur getestet werden.

Prüfungen an Maschinen, Aufzügen, hydraulischen Anlagen oder Bauteilen werden in den meisten Fällen von sachverständigen Prüfingenieuren nur unmittelbar an den Anlagen mittels mobiler Messmittel durchgeführt.

Leckerkennungen oder externe Medieneinbrüche werden, z.B. bei Aufzugsanlagen mit Erdschutzrohr, nur durch begrenzt mögliche Sichtkontrollen von Sachverständigen erfasst.

Bei unzugänglichen Anordnungen verschiedener Bauteile, z.B. in Schutzrohren, im Erdreich oder in geschlossenen Räumen und Gefäßen, sind Prüfungen und Bewertungen nur begrenzt und mit großem Zeitaufwand realisierbar.

Es ist in verschiedenen Bereichen, zum Beispiel in der Energiewirtschaft oder der Telekommunikation, bekannt, Einrichtungen der Fernwirktechnik einzusetzen, um eine Fernüberwachung und Ferndiagnose sowie eine Einflussnahme auf Betriebszustände von Anlagen aus einer entfernten Leitstelle zu organisieren.

Aus der DE 195 08 891 A1 ist es bekannt, aus einer technischen Anlage, die eine Überwachungseinrichtung aufweist, in der Messwerte und sonstige Meldungen aus der Anlage erfaßt, aufbereitet und zu einem Faxmodem geleitet werden, Messwerte und Anlagenzustandssignale über ein Telefonnetz zu einer entfernten zentralen Leitstelle zu übertragen.

Ausgelöst durch ein besonderes Ereignis, d.h. bestimmte Signalzustände, oder durch eine Anforderung von der Leitstelle aus oder durch einen festgelegten Turnus werden Daten in der aufbereiteten Form vom Sender des Modem zum Empfänger übertragen.

Nachteil dieses Systems ist, dass keine intelligente Bewertung der Prüfergebnisse vor Ort und keine sofortigen Schutzmaßnahmen vor Ort autark eingeleitet werden.

Aus der DE 36 11 656 A1 ist ein hydraulischer Sensor einer Anlage eines Untertagebaubetriebes bekannt, der an verschiedenen Messstellen einer ausgedehnten Anlage den hydraulischen Druck misst und in einer entfernten Leitstelle über Mittel der Fernwirktechnik analog oder digital sichtbar macht.

Nachteil dieses Systems ist, dass weder Schutzmaßnahmen getroffen noch eine variable Sensorik mit unterschiedlichen physikalischen Messgrößen kombiniert werden können.

Aus der DE 31 26 231 A1 ist ein Verfahren zur Fehlererkennung in der Fernwirktechnik bekannt, welches in Energieversorgungsanlagen eingesetzt wird. Von einer zentralen Stelle aus wird in entfernt gelegenen Stationen eine Fehlererkennung möglich, indem von einer Diagnoseeinrichtung in der Zentrale ein Diagnosetelegramm über eine Fernwirkleitung zum Fehlerort übertragen wird, welches eine Fehlererkennung am Fehlerort (Anlage/Station) vornimmt und den erkannten Fehler zur Diagnoseeinrichtung zurückmeldet.

Nachteil dieses Systems ist, dass diese Diagnoseeinrichtung nur zentral genutzt werden kann und Schutzmaßnahmen nicht selbsttätig auslöst. Prüfaufgaben werden vor Ort nicht selbstständig generiert und nicht bewertet

Aufgabe der Erfindung ist es, ein gattungsgemäßes Verfahren und eine Vorrichtung zu beschreiben, mit denen die Nachteile des Standes der Technik vermieden werden und mit denen gewährleistet ist, dass Sachverständige unter Zuhilfenahme von intelligenter Mess- und Prüftechnik und den bekannten Mitteln der Fernwirktechnik vorbereitend und/oder unterstützend online per Fernwirktechnik oder vor Ort Prüfaufgaben und Einflussnahmen an den zu überwachenden Objekten realisieren können und dass bei Havariefällen auftretende Gefährdungen minimiert und signalisiert werden.

Diese Aufgabe wird durch ein Verfahren mit den Merkmalen des Anspruchs 1 und durch eine Vorrichtung mit den Merkmalen des Anspruchs 9 gelöst.

Das Verfahren nach der Erfindung ist dadurch gekennzeichnet, dass über eine multifunktionale, intelligente Sensorik und eine dazugehörige Sensor-Schnittstelle das Objekt kontinuierlich auf das Vorhandensein von Fehlern oder den Eintritt eines unzulässigen Ereignisses, wie Vorhandensein eines unzulässigen Mediums, z.B. Öl oder Wasser, detektiert wird und beim Vorhandensein eines Fehlers bzw. eines unzulässigen Ereignisses das vom Sensor autark gewichtete und bewertete Detektionsergebnis über eine Modem-Schnittstelle und eine online-Verbindung zu mindestens einer Rechnerzentrale bzw. einem internetfähigen Personalcomputer zur Auslösung eines Alarms und/oder einer gleichzeitigen autarken Vor-Ort-Auslösung von Maßnahmen zur Fehlerbeseitigung und/oder Schadensminimierung geführt wird, wobei von der Zentrale oder direkt vor Ort über externe Schnittstellen der Modem-Schnittstelle jederzeit beliebige sicherheitstechnische Überprüfungen und Bewertungen der Sicherheitseinrichtungen des Objektes und der Funktion der Sensorik sowie aller anderen angeschlossenen Einrichtungen mittels Prüfroutinen durchgeführt werden.

Die Vorrichtung zur Durchführung des Verfahrens ist dadurch gekennzeichnet, dass eine multifunktionale, intelligente Sensorik, die als eine Sensor-Schnittstelle wirkt, enthaltend einen Prozessor, einen Zugangsberechtigungsprüfer, einen Impulsverstärker, einen Datenspeicher, eine Lageerkennung, eine Leitwerterkennung mit Messfühlern, externe Schnittstellen, über eine Modem-Schnittstelle, enthaltend ein Modem und eine externe Schnittstelle für eine Vor-Ort-Prüfung, und über eine online-Verbindung mit mindestens einer Rechnerzentrale bzw. mindestens einem internetfähigen Personalcomputer verbunden ist, wobei über den Impulsverstärker der Sensor-Schnittstelle das Objekt an eine Anti-Havarieeinrichtung und/oder an eine Redundanzeinrichtung angeschlossen ist.

Vorteile der Erfindung sind unter anderem die Reduzierung von kostspieligen Vor-Ort-Instandhaltungen bei Aufzügen, Maschinen oder hydraulischen Anlagen, besonders Hebeeinrichtungen oder Anlagenteile in Schutzräumen bzw. Gefäßen, die Vermeidung von Produktionsausfällen und Ersatzmaßnahmen. Des weiteren sind jederzeit einfache, zusätzliche und preisgünstige Online-Systemschecks zur Gewährleistung der Anlagensicherheit durch sachverständige Prüfingenieure mittels Fernwirktechnik möglich. Der Einsatz preiswerter multifunktionaler intelligenter Sensorik für Prüfaufgaben optimiert die Kosten.

Die Erfindung erlaubt auch, beliebige Prüfaufgaben, wie z.B. Funktionstests, der intelligenten Sensorschnittstelle online oder bei einer Vor-Ort-Prüfung direkt zu stellen und die generierte Antwort vor Ort abzufragen oder online an einen weltweit beliebig aufgestellten Personalcomputer oder dgl. zu übertragen und dort von einem sachverständigen Prüfingenieur bewerten zu lassen.

Mit den in der Sensor-Schnittstelle implementierten sicherheitstechnischen Prüfaufgaben können, z.B. an Maschinen oder Anlagen, von sachverständigen Prüfingenieuren per Fernwirktechnik online oder bei einer Vor-Ort-Prüfung über die Modem-Schnittstelle auswählbare Sicherheitsschecks realisiert werden.

Des weiteren sind dieses Verfahren und die Vorrichtung in der Lage, z.B. von einer hydraulischen Anlage ausgehende gefährliche Zustände eigenständig zu erkennen, zu analysieren und bei realer Gefährdung ein mit dem Sensor gekoppeltes Anti-Havariesystem zu aktivieren und/oder eine Redundanzeinrichtung und/oder eine Warn-Meldung zu generieren.

Zweckmäßige Ausführungsformen der Erfindung sind in Unteransprüchen beschrieben.

Die Erfindung wird nachfolgend in einem Ausführungsbeispiel einer Vorrichtung zur kontinuierlichen sicherheitstechnischen Überprüfung einer hydraulischen Anlage beschrieben. In der zugehörigen Zeichnung zeigen:
- Fig. 1:: die schematische Darstellung der Anordnung der Komponenten einer Vorrichtung nach der Erfindung zur kontinuierlichen sicherheitstechnischen Überprüfung und Diagnose von Betriebszuständen einer hydraulischen Anlage und
- Fig. 2:: eine schematische Darstellung der Anordnung der Vorrichtung nach Fig. 1 in einem Schutzrohr einer hydraulischen Anlage.

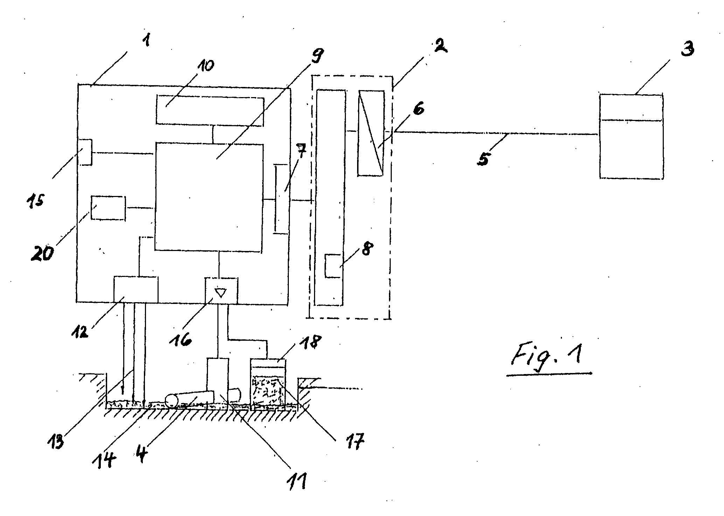

Aus der Fig. 1 ist der Signalfluss in einer Vorrichtung nach der Erfindung bei der Anwendung des erfindungsgemäßen Verfahrens ersichtlich.

Das sicherheitstechnische Prüfsystem nach dem erfindungsgemäßen Verfahren besteht aus den Baugruppen Sensor-Schnittstelle 1, die als eigenständiger Master-Sensor arbeitet, an deren externen Schnittstelle 15 beliebig weitere kompatible Sensoren angeschlossen werden können, sowie einer Modem-Schnittstelle 2 und einer Zentrale 3, in der ein sachverständiger Prüfingenieur mittels internetfähigem PC die Meldungen bearbeitet oder Prüfaufgaben vorgibt. Ebenso sind bei Bedarf vorgenannter Funktionen auch Vor-Ort über die externe Schnittstelle 8 der Modem-Schnittstelle 2 am Prüfobjekt möglich.

Die multifunktionale, intelligente Sensor-Schnittstelle 1 detektiert vorhandene Medien 14 oder Fehlermerkmale über die externe Schnittstelle 15 in unmittelbarer Umgebung bzw. an einer Maschine,einem Aufzug oder hydraulischen Anlage 4.

Wird mittels dieser in der Sensor-Schnittstelle 1 integrierten Sensorik oder mittels weiterer beliebig anschließbarer Sensorik ein Fehler oder ein gefährliches Medium, wie z.B. Öl, in der unmittelbaren Umgebung der Anlage 4 erkannt, aktiviert ein Impulsverstärker 16 in der Sensor-Schnittstelle 1 den sicheren Zustand, d.h. eine Redundanzeinrichtung 11, z.B. einen Bypaß, und/oder eine Auslöseeinheit 18, welche ein in unmittelbarer Nähe angeordnetes Gefäß 17 (Anti-Havarieeinrichtung) öffnet, sodass das darin enthaltene Schutzmittel den gefährlichen Stoff bindet.

Über eine Online-Verbindung 5 ist jederzeit in bidirektionaler Richtung eine Datenkommunikation zwischen der Sensor-Schnittstelle 1 und der Zentrale 3 möglich.

Bei einer Vor-Ort-Prüfung an der Anlage 4 ist es möglich, dass ein sachverständiger Prüfingenieur mittels transportablem PC direkt über die externe Schnittstelle 8 der Modem-Schnittstelle 2 mit der Sensor-Schnittstelle 1 kommunizieren und Daten bidirektional bearbeiten kann. Die Kommunikationsstrecke zwischen Sensor-Schnittstelle 1, der Modem-Schnittstelle 2 sowie zwischen der Zentrale 3 kann bei Bedarf drahtgebunden oder mittels Funkstrecke realisiert werden.

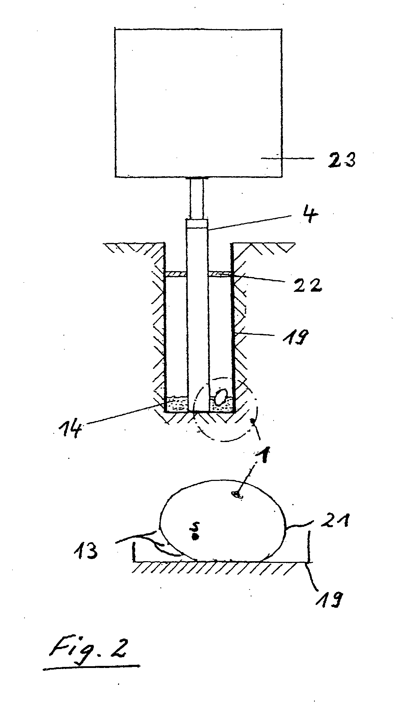

Zusätzlich können weitere beliebige kompatible Sensoren auf dieselbe Weise mit der Sensor-Schnittstelle 1, d.h. an die Masterschnittstelle über die externe Schnittstelle 15 gekoppelt werden und im Verbund miteinander kommunizieren. Der in der Fig. 2 dargestellte Sensor der Sensor-Schnittstelle 1 besteht aus einem speziell geformten schwimmfähigen öl- und wasserdichten Gehäuse 21, in welches entsprechend der Darstellung in der Fig. 1 ein Prozessor 9, ein Datenspeicher 10, eine Lageerkennung 20, eine Leitwerterkennung 12 mit speziellen Messfühlern 13 (Fig. 2), die so konzipiert sind, dass sie mittels vorgegebener Massen oder einer speziellen Anordnung eine definierte Lageposition außerhalb des Gehäuses 21 einnehmen, eingebracht sind. Diese Anordnung kann z.B. auf dem Boden oder an einer Wand der überwachten Räume (z.B. Triebwerksräume oder in Gefäßen) deponiert werden.

Der Sensor mit der Sensor-Schnittstelle 1 ist beispielhaft in ein langes Schutzrohr 19, eingebettet im Erdreich oder in Beton, eingebracht, in dem sich das zu überwachende Objekt 4, hier ein hydraulischer Zylinder mit Heber, befindet, und welches mit einer Heberfixierung bzw. Abdeckung 22 verschlossen ist. Auf dem hydraulischen Zylinder ist ein Lastaufnahmemittel 23 dargestellt.

Auf dem Boden des Schutzrohres 19 befindet sich ein flüssiges Medium 14, zum Beispiel Öl, welches bei entsprechender Menge den Sensor 1 vom Boden abhebt, seine Schwerpunktlage ändert und ihn schwimmen lässt.

Das in Fig. 1 dargestellte System aus Sensor-Schnittstelle 1, mit oder ohne weiterer angeschlossener beliebiger Sensorik, und Modem-Schnittstelle 2 überprüft sich kontinuierlich selbstständig (Systemselbstcheck) und meldet in definierten Zeitabständen seinen Status an die Zentrale 3. Grundsätzlich befindet sich die Sensorik im Stand-By-Modus und aktiviert sich selbsttätig, sobald eine Messgrößenänderung im Überwachungsbereich der Anlage 4 erkannt wird.
Während des Stand-By-Modus sowie der Diagnosephase oder während des internen Systemselbstchecks ist zu jedem Zeitpunkt parallel ein Dialog bzw. Datentransfer online über die Verbindung 5 oder über die externe Schnittstelle 8 an der Modem-Schnittstelle 2 möglich.

Die Leitwertmessung und Bestimmung des an der überwachten Anlage 4 befindlichen Mediums 14 erfolgt mit der schwimmfähigen Sensor-Schnittstelle 1 und den Messfühlern 13, die entlang der elliptischen Gehäusekontur 21 in einem vorgegebenen Abstand zur Medienoberfläche angeordnet sind (Fig. 2).

Von dem in der Sensor-Schnittstelle 1 befindlichen Prozessor 9 werden die an der Leitwerterkennung 12 anliegenden Daten übernommen, verarbeitet und entsprechend einem vorgegebenen implementierten Algorithmus in dem Datenspeicher 10 mittels der gespeicherten Daten verglichen, berechnet, gewichtet und in einen Speicher des Datenspeichers 10 zurückgeschrieben.

Wird von der Logik des Prozessors 9 ein Fehler im Überwachungsbereich der Anlage 4 erkannt, so wird sofort nochmals parallel eine Plausibilitätskontrolle durchge-führt. Erst nach Wichtung und Bewertung des positiven Ergebnisses der überprüften Aussage wird der Impulsgenerator 16 vom Prozessor 9 angesteuert.

Mittels einer im Prozessor 9 integrierten Logikweiche wird entschieden, ob die Redundanzeinrichtung 11 oder die Anti-Havarieeinrichtung 17 oder beide Einrichtungen aktiviert werden. Zusätzlich wird eine Alarmmeldung von der Sensor-Schnittstelle 1 generiert und mittels des Übertragungs-systems über das Modem 6 online über die Verbindung 5 an eine von mehreren möglichen vorprogrammierten Zentralen 3 übertragen. Die Modem-Schnittstelle 2 ist in der Lage, bei Bedarf eigenständig Alarmmeldungen an die Zentrale 3 oder andere vorprogrammierte Ausweichzentralen zu übermitteln.

Ferner überwacht die Prozessorlogik 9 kontinuierlich die externe Schnittstelle 15 des Mastersensors und adaptiert sich selbsttätig auf weitere beliebig mittels Draht- oder Funktechnik anschließbare kompatible Messsensoren bzw.

Datenaufnehmer, wie z.B. eine Videokamera oder Drucksensoren, die für andere Prüfaufgaben sinnvoll sind. Erst nach Anmeldung dieser zusätzlichen Sensorik an der externen Schnittstelle 15 wird die Datenkommunikation von dieser Masterschnittstelle, d.h. der Sensor-Schnittstelle 1, überwacht.

Die externen Schnittstellen 15 sind gegen flüssige Medien gekapselt.

Von der Zentrale 3 und/oder über die externe Schnittstelle 8 ist jederzeit eine Parametrisierung jedes angeschlossenen bzw. angemeldeten Sensors mittels Online-Daten-Übertragung 5 bidirektional möglich. Des weiteren können von der Zentrale 3 für besondere Prüfanforderungen konkrete Prüfaufgaben an die intelligente Sensor-Schnittstelle 1 gestellt werden.

Die intelligente Sensor-Schnittstelle 1 ist in der Lage, online gestellte Prüfaufgaben oder auch selbsttätig generierte Prüfaufgaben mittels der im Datenspeicher hinterlegten Daten, Zeitprofile und Algorithmen zu lösen und das Ergebnis zur Bewertung an den sachverständigen Prüfingenieur in der Zentrale 3 zurückzusenden.

Wird von der Zentrale 3 oder über die Schnittstelle 8 eine online-Verbindung zur überwachten Anlage 4 aufgebaut, so wird immer mittels eines Zugangsberechtigungsprüfers 7 in der Sensor-Schnittstelle 1 ein dynamisches Schlüsselwort erzeugt und mit dem von der Zentrale 3 empfangenen Schlüsselwort verglichen. Nur bei Schlüsselwortqleichheit wird von der Entscheidungslogik im Prozessor 9 ein Verbindungsaufbau und Datentransfer über die Verbindung 5 von der Zentrale 3 zur Sensor-Schnittstelle 1 akzeptiert.

Somit ist abgesichert, dass nur berechtigte sachverständige Prüfingenieure auf die hinterlegten Daten in der Sensor-Schnittstelle 1 Zugriff haben, Daten auslesen, Parameter oder Zeitprofile von angeschlossenen kompatiblen Sensoren ändern können.

Entsprechend der Darstellung in der Fig. 2 ist das Gehäuse 21 der Masterschnittstelle bzw. des Schnittstellen-Sensors 1 elliptisch mit definiertem Schwerpunkt S ausgebildet.

Durch diese Anordnung wird ein nicht dargestellter und in den Sensor 1 integrierter Lagesensor von einem sich ansammelnden Medium 14 bewegt. Er signalisiert dann das Vorhandensein eines Mediums 14. Bei weiterem Zufluss richtet sich der Sensor 1 selbsttätig im Medium 14 auf, und seine entlang der Gehäusekontur 21 angeordneten Messfühler 13 werden unterschiedlich tief in das umgebende Medium 14 eintauchen. Somit ist eine Messung des vorhandenen Mediums 14 in vorgegebenen Abständen zur Medienoberfläche möglich.

Das so von den Messfühlern 13 detektierte Medium wird mittels Leitwerterkennung 12 und den hinterlegten Daten im Datenspeicher 10 verglichen und unter Verwendung geeigneter Algorithmen berechnet und somit das den Sensor 1 umgebende Medium 14, z.B. Öl oder Wasser bzw. Gemische unterschiedlicher Konsistenz, eindeutig bestimmt. In Abhängigkeit vom ermittelten Messwert und dem analysierten Umweltgefährdungsgrad wird mittels der Logikweiche des Prozessors 9 eine abgesicherte Entscheidung getroffen und ggf. optional ansteuerbare Anti-Havariesysteme 17 und/oder Redundanzeinrichtungen 11 als Reparaturalternative (Bypaß) über den Impulsverstärker 16 über Draht- oder Funktechnik aktiviert.

Gleichzeitig wird über die Sensor-Schnittstelle 1 und die Modem-Schnittstelle 2 eine oder mehrere vorprogrammierte Verbindungen zu weltweit anwählbaren kompatiblen PC's in einer Zentrale 3 aufgebaut und dort eine Alarmmeldung generiert. Ein sachverständiger Prüfingenieur empfängt die am Prüfort generierten Ergebnisse, bewertet, wichtet und leitet, wenn notwendig, zusätzliche Hilfsmaßnahmen ein.

Die Modem-Schnittstelle 2 kann beliebig autark angeordnet sein oder in bestehende Kommunikationssysteme, z.B. Notrufoder Alarmanlagen integriert sein oder deren existierende Baukomponenten zum Kommunikationsaufbau kostengünstig mitbenutzen.

Die intelligente Sensorschnittstelle 1 ermöglicht die eigenständige und kontinuierliche Überwachung von Aufzügen, hydraulischer Anlagen und Bauteilen, z.B. in Schutzräumen oder -rohren 19 (Fig. 1, 2) und alarmiert bei entstehenden Havarien online einen frei anwählbaren PC bzw. eine definierte Zentrale und minimiert gleichzeitig auftretende Gefährdungen bis zum Eintreffen von Hilfsdiensten durch Verteilung eines Schutzmittels (z.B. Ölbinder) aus dem Anti-Havariesystem 17 (Bindemittelgefäß).

Des weiteren kann online von der Zentrale 3 oder bei einer Vor-Ort-Prüfung über die externe Schnittstelle 8 unterstützend mit dem System die hydraulische Anlage sicherheitstechnisch überprüft, bewertet sowie die Funktion der Sensorik sowie aller angeschlossener Überwachungseinrichtungen mittels vorgegebener Prüfaufgaben von einem sachverständigen Prüfingenieur getestet werden.

### Bezugszeichenliste

- 1: Sensor-Schnittstelle
- 2: Modem-Schnittstelle
- 3: Zentrale
- 4: Anlage (zu überwachendes Objekt)
- 5: Online-Verbindung
- 6: Modem
- 7: Zugangsberechtigungsprüfer
- 8: Externe Schnittstelle
- 9: Prozessor
- 10: Datenspeicher
- 11: Redundanzeinrichtung
- 12: Leitwerterkennung
- 13: Messfühler
- 14: Medium
- 15: Externe Schnittstelle
- 16: Impulsverstärker
- 17: Anti-Havarieeinrichtung (Gefäß)
- 18: Auslöseeinrichtung
- 19: Schutzraum/-rohr
- 20: Lageerkennung
- 21: Gehäuse
- 22: Abdeckung
- 23: Lastaufnahmemittel
- S: Schwerpunkt

## Patentansprüche

1. Verfahren für sicherheitstechnische Überprüfungen, zur Diagnose und zur Überwachung von Objekten (4) wie Anlagen, Maschinen mittels Sensorik und Fernwirktechnik,
**dadurch gekennzeichnet, dass** über eine multifunktionale, intelligente Sensorik und eine dazugehörige Sensor-Schnittstelle (1) das Objekt (4) kontinuierlich auf das Vorhandensein von Fehlern oder den Eintritt eines unzulässigen Ereignisses wie Vorhandensein eines unzulässigen Mediums (14) wie Öl detektiert wird und beim Vorhandensein eines Fehlers bzw. eines unzulässigen Ereignisses das vom Sensor (1) autark gewertete Detektionsergebnis über eine Modem-Schnittstelle (2) und eine online-Verbindung (5) zu mindestens einer Rechnerzentrale (3) bzw. einem internetfähigen Personalcomputer zur Auslösung eines Alarms und/oder einer gleichzeitigen autarken Vor-Ort- Auslösung von Maßnahmen zur Fehlerbeseitigung und/oder Schadensminimierung geführt wird, wobei von der Zentrale (3) oder direkt vor Ort über externe Schnittstellen (8) der Modem-Schnittstelle (2) jederzeit beliebige sicherheitstechnische Überprüfungen und Bewertungen der Sicherheitseinrichtungen des Objekts (4) und der Funktion der Sensorik sowie aller anderen angeschlossenen Einrichtungen mittels Prüfroutinen durchgeführt werden.

2. Verfahren für sicherheitstechnische Überprüfungen, zur Diagnose und zur Überwachung von Objekten (4), wie Anlagen, Aufzüge und Maschinen mittels Sensorik und Fernwirktechnik,
**dadurch gekennzeichnet, dass** über eine multifunktionale, intelligente Sensorik und eine dazugehörige Sensor-Schnittstelle (1) das Objekt (4) kontinuierlich auf das Vorhandensein von sicherheitstechnischen Fehlern (z.B. elektrisch, mechanisch) und/oder den Eintritt eines unzulässigen Ereignisses, wie Vorhandensein eines unzulässigen Mediums (14), wie Öle oder Wasser, detektiert wird und beim Vorhandensein eines Fehlers bzw. eines unzulässigen Ereignisses das vom Sensor (1) autark gewertete Detektionsergebnis über eine Modem-Schnittstelle (2) und eine online-Verbindung (5) zu mindest einer Rechnerzentrale (3) bzw. einem internetfähigen Personalcomputer zur Auslösung eines Alarms und/oder einer gleichzeitigen autarken Vor-Ort-Auslösung von Maßnahmen zur Fehlerbeseitigung und/oder Schadensminimierung geführt wird, wobei von der Zentrale (3) oder direkt vor Ort über externe Schnittstellen (8) der Modem-Schnittstelle (2) jederzeit beliebige sicherheitstechnische Überprüfungen und Bewertungen der Sicherheitseinrichtungen des Objekts (4) und der Funktion der Sensorik sowie aller anderen angeschlossenen Einrichtungen mittels Prüfroutinen durchgeführt werden, wobei an die externe Schnittstelle (15) weitere, beliebige optische, akustische, elektrische und andere Sensoren anschließbar sind, die eine adaptive Prüfaussage je nach Beschaffenheit des Prüfobjektes ermöglichen.

3. Verfahren nach Anspruch 1 oder 2, **dadurch gekennzeichnet, dass** eine Logik des Prozessors (9) sicherheitstechnische Fehler und unzulässige Ereignisse im Überwachungsbereich erkennt, eine Plausibilitätskontrolle durchführt und einen Impulsgenerator (16) in der Sensor-Schnittstelle (1) ansteuert, wenn die Kontrolle positiv ist, woraufhin über eine Logikweiche des Prozessors (9) entschieden wird, ob eine Redundanzeinrichtung (11) und/oder eine Anti-Havarieeinrichtung (17) aktiviert werden.

4. Verfahren nach den Ansprüchen 1 bis 3, **dadurch gekennzeichnet, dass** eine Verbindung zum überwachten Prüfobjekt (4) nur dann hergestellt wird, wenn eine Zugangsberechtigungsprüfung (7) in der Sensor-Schnittstelle (1) erfolgte.

5. Verfahren nach den Ansprüchen 1 bis 4, **dadurch gekennzeichnet, dass** das Objekt (4) eine Maschine oder eine Anlage oder eine hydraulische Anlage ist.

6. Verfahren nach Anspruch 5, **dadurch gekennzeichnet, dass** hydraulische Komponenten einer Anlage mindestens in Teilen in eine Schutzeinrichtung (19) eingebracht ist.

7. Verfahren nach Anspruch 6, **dadurch gekennzeichnet, dass** bei hydraulischen Komponenten einer Anlage in Schutzeinrichtungen von sachverständigen Prüfingenieuren per Fernwirktechnik online (5) oder vor Ort über die Modem-Schnittstelle (2) Sicherheitsschecks durchgeführt werden.

8. Verfahren nach den Ansprüchen 5 bis 7, **dadurch gekennzeichnet, dass** in hydraulischen Komponenten einer Anlage auftretende Fehler und/oder das Auftreten von unzulässigen Ereignissen von der intelligenten Sensorschnittstelle (1) selbständig erkannt, analysiert und bei realer Gefährdung der Anlage die Anti-Havarie-Einrichtung (17) und/oder die Redundanzeinrichtung (11) autark aktiviert und/oder eine Warn-Meldung generiert werden.

9. Vorrichtung zur Durchführung des Verfahrens nach den Ansprüchen 1 bis 8,
**Dadurch gekennzeichnet, dass** eine multifunktionale, intelligente Sensorik, die als eine Sensor-Schnittstelle (1) wirkt, enthaltend einen Prozessor (9), einen Impulsverstärker (16), einen Datenspeicher (10), eine Lageerkennung (20), eine Leitwerterkennung (12) mit Messfühlern (13), externe Schnittstellen (15), einen Zugangsberechtigungsprüfer (7), über eine Modem-Schnittstelle (2), enthaltend ein Modem (6) und eine externe Schnittstelle (8) für eine Vor-Ort-Prüfung, und über eine online-Verbindung (5) mit mindestens einer Rechnerzentrale bzw. mindestens einem internetfähigen Personalcomputer (3) verbunden ist, wobei über den Impulsverstärker (16) der Sensor-Schnittstelle (1) das Objekt (4) an eine Anti-Havarieeinrichtung (17) und/oder an eine Redundanzeinrichtung (11) angeschlossen ist.

10. Vorrichtung nach Anspruch 9 , **dadurch gekennzeichnet, dass** der Sensor als Sensor-Schnittstelle (1) von einem oval/elliptisch geformten, schwimmfähigen, flüssigkeitsdichten Gehäuse (21) umgeben ist, aus welchem die Messfühler (13) in einer definierten Position herausragen, wobei die externen Schnittstellen (15) der Sensor-Schnittstelle (1) flüssigkeitsdicht gekapselt sind.

11. Vorrichtung nach den Ansprüchen 9 oder 10, **dadurch gekennzeichnet, dass** in den Sensor (1) ein Lagesensor (20) integriert ist, der von dem flüssigen Medium (14) in der Umgebung des Sensors (1) bewegt wird und diesen selsttätig aufrichtet, so dass die entlang der Gehäusekontur (21) angeordneten Messfühler (13) unterschiedlich tief in das umgebende Medium (14) eintauchen.
